Europäisches Patentamt

European Patent Office

Office européen des brevets

(19)

(11) Publication number: **0 049 919**

**A1**

(12) **EUROPEAN PATENT APPLICATION**

(21) Application number: 81201082.5

(22) Date of filing: 29.09.81

(51) Int. Cl.³: **G 06 F 7/68**
**G 01 F 15/075, B 67 D 5/22**
**G 01 F 15/02**

(30) Priority: 08.10.80 NL 8005550

(43) Date of publication of application:
21.04.82 Bulletin 82/16

(84) Designated Contracting States:
AT BE CH DE FR GB IT LI LU NL SE

(71) Applicant: Koppens, Leonardus Petrus
St. Hubertuslaan 42
B-2232 's-Gravenwezel(BE)

(72) Inventor: Koppens, Leonardus Petrus
St. Hubertuslaan 42
B-2232 's-Gravenwezel(BE)

(74) Representative: Noz, Franciscus Xaverius, Ir. et al,
Boschdijk 155 P.O. Box 645
NL-5600 AP Eindhoven(NL)

(54) Digital adaptation and setting device to be connected between a volume meter and a digital indication device.

(57) The invention relates to a digital adaptation and setting device to be connected between a volume meter and a digital indicating device, said volume meter being connected to a fluid source and producing, after each displacement of a first given volume unit of fluid, a pulse at an electric output thereof and said indicating device displaying the dispensation of a second given volume unit of fluid after each reception of a pulse at an input thereof, whereby said indicating device comprises a n-bits memory whose clock input is connected to the pulse producing output of the volume meter and whose data output is connected to a first input of n-bits adder, the sum output of which is connected to the data input of the memory, a second input being connected to a n-bits setting member and the carry signal output being connected through a pulse forming member to the input of the indicating device.

**0049919**

-1-

Digital adaptation and setting device to be connected between a
volume meter and a digital indication device.

The invention relates to a digital adaption and setting device to
be connected between a volume meter and a digital indicating device, said
volume meter being connected to a fluid source and producing, when fluid
is dispensed, after each displacement of a first given fluid unit, a pulse
at an electric output and said indicating device, after each reception of
a pulse at an input thereof, indicating the dispensing of a second given
fluid unit.

The present invention particularly relates to fuel supply devices
comprising an electronic counter, though it is not limited thereto.

An adaptation device is required when the number of pulses supplied
by the volume meter, after the dispensation of a given amount of fluid, differs from the number of pulses required by an indicating device for displaying the given amount of fluid dispensed. The number of pulses supplied by
the volume meter in the above-mentioned case may exceed the number of pulses
required by the enunciator at the output to display the dispensed amount of
fluid. A logic solution of this problem would be a divider. A first disadvantage of this solution is that the result lags behing so that when the dispensation of an amount of fluid is stopped, the indicating device does not display the correct amount. A second disadvantage is that the adaptation can be corrected only with difficulty as may be required, for example, by the weights and measures office. For fuel, for example, an accuracy of setting of $1^o/oo$ may be required.

The invention has for its object to obviate these disadvantages and provided to this end a device of the kind set forth, which is characterized by comprising: a n bits memory, whose clock input is connected to the pulse generating output of the volume meter and whose data output is connected to a first input of a n bits adding member, the sum output of which is connected to the data input of the memory, a second input being connected to a n -bits setting and the carry signal output being connected through a pulse forming member to the input of the indicating device. In this way it is ensured that the calculated number of output pulses of the adaptation and setting device is correct at any instant.

Since, particularly in the case of fuel delivery, the fluid volume unit generating a pulse at an electric output of the volume meter will appreaciably vary with temperature, a preferred embodiment of the invention comprises a device which is characterized in that the volume meter furthermore supplie a temperature signal, which is applied to the setting member which comprises means compensating for the temperature setting.

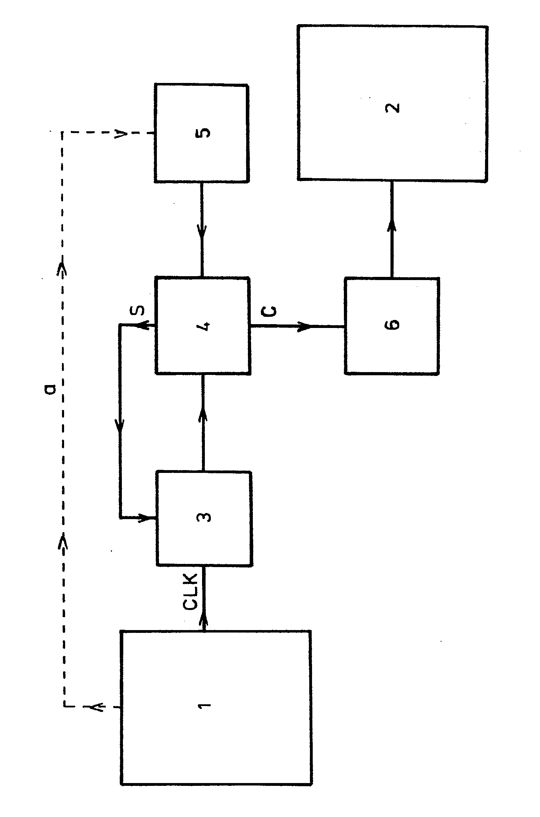

The invention will be described in further detail with reference to the drawing having a single Figure illustrating the digital adaptation and setting device embodying the invention connected between a volume meter and a digital indication device.

Referring to the Figure, reference numeral 1 designates the volume meter which is connected to the fluid source (not shown in the Figure) and to means delivering the fluid through the volume meter 1. In a preferred embodiment of the device according to the invention employed in a fuel dispensing device a rotor meter is used. To the rotor of the rotor meter is fastened a magnet disc which is magnetised in a manner such that, viewed along the circumference, four times alternating North- and South-polarised fields are formed. This magnet disc is located inside the meter housing so that no shafts are protruding and a satisfactory seal is ensured. On the meter housing in which the magnet disc can rotate is placed at least one magnet-field sensitive pick-up, for example, a Hall generator, which translates the displacement of fluid causing the rotor to rotate into electric pulses.

In a specific case to which the invention is not limited, the amount of fluid displaced per revolution of the rotor is 25 ccms. This means that the fluid displacement per pulse is 6.25 ccms , since along the circumference of the magnet disc four times alternating North – and South-polarised fields are formed.

Recapitulating it can, therefore, be stated that the volume meter 1 may be considered to form a member which produces a pulse at an electric output after each displacement of a first given fluid volume unit, in the specific case mentioned above 6.25 ccms.

Reference numeral 2 designates an indication device which, after each reception of a pulse at an input, displays the delivery of a second given fluid volume unit, for example, by an increment of the indicated total volume of delivered fluid by a second volume unit. In a specific case of an electronic counter for a fuel dispensing device units of 10 ccms are read.

In the above-mentioned specific case the volume meter supplies a pulse for every 6.25 ccms of delivered fluid, whilst the indicating device shows increments of 10 ccms per pulse received. In order to control the display of the indicating device by the volume meter 1 a logical circuit is required for setting the overall measuring system to the correct value. The invention has furthermore for its object to provide such a logical circuit that the overall measuring system can be set thereby.

On the basis of the above-mentioned specific case the number of output pulses supplied by the volume meter 1 should be 6.25 /10 times the number of pulses applied to the indicating device 2, which means that, for example, for the delivery of 10 litres of fluid the volume meter generates 1600 pulses, whereas 1000 pulses are applied to the indicating device 2 so that 10.00 is read.

Referring again to the Figure, reference numberal 3 designated a n-bits memory (for example, three times the integrated circuit 4076 so that n = 12), the clock input CLK of which is connected to the pulse output of the volume meter 1, whereas the date output of the n-bits memory 3 is connected to a n-bits adder 4(for example, three times the integrated circuit 4008, so that also n = 12), the sum output of which is connected to the data input of the n-bits memory 3. A second input of the n-bits adder is connected to a n-bits setting member 5. The carry signal output C of the n-bits adder 4 is connected to a pulse forming member 6 retaining the carry signal and applying in turn the output pulse signal to the indicating device 2.

In the further description are assumed a 12 bits memory, a 12 bits adder and a 12 bits setting member. The choice of n = 12 will be explained hereinbelow.

The maximum sum of the adder 3 is $2^{12}$ = 4,096 and, therefore, the setting factor adjusted by the setting device 5 has to be equal to 4096 x 6.25/10 = 2560, in hexadecimal code equal to A00.

In the simplest case, when the temperature compensation to be discussed hereinafter need not be carried out, the setting device may comprise three hexadecimal switches by which 2560 can be set by A00.

n = 12 is chosen because the prerequisite is that the setting, adjustment or control of the measuring system should be correctable in steps smaller than 1 $^{o}$/oo. Thus, when for example 10 litres of petrol are delivered the reading of the indicating device is 10,000 litres. When n = 12 and the setting is based on 2560, a control in steps of 1/2560 = 0,39 $^{o}$/oo is possible. When n = 8, a control in steps of 1/265 or about 0.39 % is possible. Consequently, the choise of the number $\underline{n}$ depends on the desired accuracy of setting.

When the device embodying the invention is used in a fuel dispensing device it may be desirable to construct the device in a parallel duplicate, in which case an additional magnetic-field sensor has to be used.

If the temperature has a significant influence on the number of pulses supplied by a volume meter at the delivery of a given amount of fluid or, in other terms, if the temperature affects the amount of displaced fluid at which the volume meter produces a pulse, a temperature compensating control may be provided, which is designated in the Figure by the symbol $\underline{a}$ . For cooperation with the volume meter a temperature transducer is provided, which supplies a signal characteristic of the temperature at the area of the volume meter.

This temperature signal is, in turn, utilized for correcting the setting of the n-bits setting member 5, which can in this case no longer solely consist of setting switches, about the settig factor at n = 12, i.e. the setting value divided by 4096 in accordance with the measured temperature signal. The latter may be carried out by a microprocessor in which the temperature-variation of the volume meter can be stored in its memory in tabulated form.

The device embodying the invention can be essentially constructed by a thick-film technique. Setting can be simply made in various units, for example, litres or American or British gallons.

-1-

CLAIMS

1.      A digital  adaptation and setting device to be connected between a volume meter and a digital indicating device, said volume meter being connected to a fluid source and producing, after each displacement of a first given volume unit of fluid, a pulse at an electric  output thereof and said indicating device displaying the dispensation of a second given volume unit of fluid after each reception  of a pulse at an input thereof, characterized in that said indicating device comprises a n-bits memory whose clock input is connected to the pulse producing output of the volume meter and whose data output is connected to a first input of n-bits adder, the sum output of which is connected to the data input of the memory, a second input being connected to a n-bits setting member and the carry signal output being connected through a pulse forming member to the input of the indicating device.

2.      A digital adaptation and setting device as claimed in Claim 1 characterized in that the number n  is chosed in accordance with the desired setting accuracy.

3.      A digital adaptation  and setting device as claimed in Claim 1 or 2 characterized in that n = 12.

4.      A digital adaptation and setting device as claimed in anyone of the preceding Claims characterized in that the volume meter furthermore supplies a temperature signal, which is applied to the setting member which comprises means for compensating the setting with respect to temperature.

0049919

European Patent
Office

**EUROPEAN SEARCH REPORT**

Application number

EP 81 20 1082

| | DOCUMENTS CONSIDERED TO BE RELEVANT | | CLASSIFICATION OF THE APPLICATION (Int. Cl. ³) |
|---|---|---|---|
| Category | Citation of document with indication, where appropriate, of relevant passages | Relevant to claim | |
| | US – A – 3 716 794 (COLLINS RADIO) <br> * Whole document * <br> -- | 1,2 | G 06 F 7/68 <br> G 01 F 15/075 <br> B 67 D 5/22 <br> G 01 F 15/02 |
| | US – A – 3 603 773 (VERNITRON) <br> * Whole document * <br> -- | 1 | |
| | US – A – 3 831 015 (INTEL) <br> * Figures 1,2; column 1, line 68 to column 4, line 27 * <br> -- | 1,4 | **TECHNICAL FIELDS SEARCHED (Int.Cl.³)** <br><br> G 06 F 7/68 <br> G 01 F 15/075 <br> 15/02 |
| | US – A – 4 005 603 (AIRCO) <br> * Figure 1; column 4, line 9 to column 7, line 48 * <br> -- | 4 | |
| | US – A – 3 831 011 (HALLIBURTON) <br> * Figuur 1; column 3, line 9 to column 4, line 38 * <br> -- | 4 | |
| A | US – A – 3 660 644 (HALLIBURTON) | 1 | **CATEGORY OF CITED DOCUMENTS** <br><br> X: particularly relevant if taken alone <br> Y: particularly relevant if combined with another document of the same category <br> A: technological background <br> O: non-written disclosure <br> P: intermediate document <br> T: theory or principle underlying the invention <br> E: earlier patent document, but published on, or after the filing date <br> D: document cited in the application <br> L: document cited for other reasons <br><br> &: member of the same patent family, corresponding document |

| | The present search report has been drawn up for all claims | |
|---|---|---|
| Place of search <br> The Hague | Date of completion of the search <br> 21-01-1982 | Examiner <br> FORLEN |

EPO Form 1503.1  06.78